# EUROPEAN PATENT SPECIFICATION

(11) **EP 4 466 870 B1**
(45) Date of publication and mention of the grant of the patent: **18.02.2026**
(21) Application number: 22786948.4
(22) Date of filing: 23.09.2022
(51) Int. Cl.: H04W 4/50, H04W 8/20, H04W 48/08

(54) **METHODS AND APPARATUSES FOR INFORMING A USER EQUIPMENT APPARATUS OF AN UPDATE IN AN AERIAL SUBSCRIPTION FOR UNCREWED AERIAL SYSTEM SERVICES**
VERFAHREN UND VORRICHTUNGEN ZUM INFORMIEREN EINES BENUTZERGERÄTS ÜBER EINE AKTUALISIERUNG EINES LUFTVERKEHRSABONNEMENTS FÜR UNBEMANNTE LUFTFAHRTDIENSTE
PROCÉDÉS ET APPAREILS POUR INFORMER UN APPAREIL D'ÉQUIPEMENT D'UTILISATEUR D'UNE MISE À JOUR DANS UN ABONNEMENT AÉRIEN POUR DES SERVICES DE SYSTÈME AÉRIEN SANS ÉQUIPAGE

(30) Priority: 15.07.2022 GR 20220100562
(43) Date of publication of application: 27.11.2024
(73) Proprietor: Lenovo (Singapore) Pte. Ltd, New Tech Park 556741 (SG)
(72) Inventor: ATARIUS, Roozbeh, La Jolla, California 92037 (US); VELEV, Genadi, 64291 Darmstadt (DE); KARAMPATSIS, Dimitrios, Ruislip HA4 6ED (GB)
(74) Representative: Openshaw & Co.
(86) International application number: PCT/EP2022/076594
(87) International publication number: WO 2024/012709

(56) References cited:
- SAMSUNG ET AL: "UUAA-MM Procedure Updates", vol. SA WG2, no. e-meeting; 20211115 - 20211122, 8 November 2021 (2021-11-08), XP052075627, Retrieved from the Internet <URL:https://ftp.3gpp.org/tsg_sa/WG2_Arch/TSGS2_148E_Electronic_2021-11/Docs/S2-2108457.zip S2-2108457_ID_UAS_UUAA-MM Procedure Updates.docx> [retrieved on 20211108]
- "3rd Generation Partnership Project; Technical Specification Group Services and System Aspects; Procedures for the 5G System (5GS); Stage 2 (Release 17)", vol. SA WG2, no. V17.5.0, 15 June 2022 (2022-06-15), pages 1 - 744, XP052182883, Retrieved from the Internet <URL:https://ftp.3gpp.org/Specs/archive/23_series/23.502/23502-h50.zip 23502-h50.docx> [retrieved on 20220615]
- SAMSUNG: "UUAA-MM Procedure Updates", vol. SA WG2, no. e-meeting; 20211018 - 20211022, 11 October 2021 (2021-10-11), XP052061548, Retrieved from the Internet <URL:https://ftp.3gpp.org/tsg_sa/WG2_Arch/TSGS2_147E_Electronic_2021-10/Docs/S2-2107322.zip S2-2107322_ID_UAS_23.256_UUAA-MM Procedure Updates.docx> [retrieved on 20211011]

## Description

### Field

The subject matter disclosed herein relates generally to the field of implementing methods and apparatuses for informing a user equipment apparatus of an update in an aerial subscription for uncrewed aerial system services. This document defines a method performed by a network entity, a method performed by a device, a network entity, and a device.

### Background

3GPP has defined architecture enhancements for Uncrewed Aerial Vehicles (UAVs) with the following functionality in 3GPP TS 23.256 v17.3.0:
- Authentication and authorization of a UAV with the Uncrewed Aerial System Service Supplier (USS) during 5GS initial registration.
- Authentication and authorization of a UAV with the USS during 5GS mobility registration.
- Authentication and authorization of a UAV with the USS during a Protocol Data Unit (PDU) session establishment and Packet Data Network (PDN) connection establishment.
- Support for USS authorization of Command and Control (C2) Communication.
- A reference model for UAV tracking, supporting three UAV tracking modes:
   1. UAV location reporting mode;
   2. UAV presence monitoring mode; and
   3. Unknown UAV tracking mode.

The 3GPP system supports geofencing (for in-flight UAVs) and geocaging (for UAVs on the ground intending/preparing to fly) functionality in USS by providing enablers such as location services, event notification to a subscribing USS, etc.

Geofencing/geocaging mechanisms are an air traffic control functionality performed by the USS and are out of the scope of 3GPP. The 3GPP system provides enablers to support geofencing/geocaging functionality in the USS, e.g. location services, enablement of C2 connectivity, event notification to a subscribing USS, etc. However, no specific geofencing/geocaging mechanisms are defined in 3GPP.

Document SAMSUNG ET AL: "UUAA-MM Procedure Updates",3GPP DRAFT; S2-2108457, 3RD GENERATION PARTNERSHIP PROJECT (3GPP) is a change request which proposes that the network should inform the UE about changes in aerial subscription information using the existing UCU procedure to ensure the UE is aware of any new aerial services available nevertheless it does not explicitly specify the message used within that procedure.

### Summary

Disclosed herein are procedures for informing a user equipment apparatus of an update in an aerial subscription for uncrewed aerial system services. Said procedures may be implemented by the apparatuses disclosed herein.

In an aspect, there is provided a method according to the disclosure of independent claim 1, performed by a first network entity. The method comprises determining that there has been a change to subscription information of a device such that the device is allowed to use an aerial service. The method further comprises transmitting, to the device, a message comprising an indication that the device's changed subscription information allows the device to use the aerial service, wherein the indication comprises a Service-Level-AA subscription indication.

In another aspect, there is provided a method according to the disclosure of independent claim 12, performed by a device. The method comprises receiving, from a first network entity, a message comprising an indication that subscription information of the device has changed to allow the device to use an aerial service, wherein the indication comprises a Service-Level-AA subscription indication. The method further comprises, in response to receiving the message, transmitting to the first network entity a request for a mobility registration update procedure.

In another aspect, there is provided a first network entity according to the disclosure of independent claim 14. The first network entity comprises a processor configured to determine that there has been a change to subscription information of a device such that the device is allowed to use an aerial service. The first network entity further comprises a transmitter configured to transmit, to the device, a message comprising an indication that the device's changed subscription information allows the device to use the aerial service, wherein the indication comprises a Service-Level-AA subscription indication.

In another aspect, there is provided a device according to the disclosure of independent claim 15. The device comprises a receiver configured to receive, from a first network entity, a message comprising an indication that subscription information of the device has changed to allow the device to use an aerial service, wherein the indication comprises a Service-Level-AA subscription indication. The device further comprises a transmitter configured to, in response to receiving the message, transmit to the first network entity a request for a mobility registration update procedure.

### Brief description of the drawings

In order to describe the manner in which advantages and features of the disclosure can be obtained, a description of the disclosure is rendered by reference to certain apparatuses and methods which are illustrated in the appended drawings. Each of these drawings depict only certain aspects of the disclosure and are not therefore to be considered to be limiting of its scope. The drawings may have been simplified for clarity and are not necessarily drawn to scale.

Methods and apparatus for methods and apparatuses for informing a user equipment apparatus of an update in an aerial subscription for uncrewed aerial system services will now be described, by way of example only, with reference to the accompanying drawings, in which:
Figure 1 depicts a wireless communication system in which procedures for informing a user equipment apparatus of an update in an aerial subscription for uncrewed aerial system services may be performed;
Figure 2 depicts a user equipment apparatus that may be used for implementing the methods described herein;
Figure 3 depicts a network node that may be used for implementing the methods described herein;
Figure 4 depicts an architecture in which a Session Management Function and a Packet Data Network Gateway-C (PGW-C) implements functions as defined in 3GPP TS 23.501 v17.7.1;
Figure 5 depicts a further architecture in which a known UAS Service Supplier UAV Authorization/Authentication procedure is performed as defined in 3GPP TS 23.256 v17.3.0;
Figure 6 depicts a procedure performable by the further architecture;
Figure 7 depicts a Service-level Authorization/Authentication container information element;
Figure 8 depicts a Service-level Authorization/Authentication container contents;
Figure 9 depicts a Service-level Authorization/Authentication subscription indication;
Figure 10 depicts a method performed by a first network entity; and
Figure 11 depicts a further method performed by a device.

### Detailed description

As will be appreciated by one skilled in the art, aspects of this disclosure may be embodied as a system, apparatus, method, or program product. Accordingly, arrangements described herein may be implemented in an entirely hardware form, an entirely software form (including firmware, resident software, micro-code, etc.) or a form combining software and hardware aspects.

For example, the disclosed methods and apparatus may be implemented as a hardware circuit comprising custom very-large-scale integration ("VLSI") circuits or gate arrays, off-the-shelf semiconductors such as logic chips, transistors, or other discrete components. The disclosed methods and apparatus may also be implemented in programmable hardware devices such as field programmable gate arrays, programmable array logic, programmable logic devices, or the like. As another example, the disclosed methods and apparatus may include one or more physical or logical blocks of executable code which may, for instance, be organized as an object, procedure, or function.

Furthermore, the methods and apparatus may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In certain arrangements, the storage devices only employ signals for accessing code.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random-access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain, or store, a program for use by or in connection with an instruction execution system, apparatus, or device.

Reference throughout this specification to an example of a particular method or apparatus, or similar language, means that a particular feature, structure, or characteristic described in connection with that example is included in at least one implementation of the method and apparatus described herein. Thus, reference to features of an example of a particular method or apparatus, or similar language, may, but do not necessarily, all refer to the same example, but mean "one or more but not all examples" unless expressly specified otherwise. The terms "including", "comprising", "having", and variations thereof, mean "including but not limited to", unless expressly specified otherwise. An enumerated listing of items does not imply that any or all of the items are mutually exclusive, unless expressly specified otherwise. The terms "a", "an", and "the" also refer to "one or more", unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one, and only one, of any single item in the list. For example, "one of A, B and C" includes only A, only B or only C and excludes combinations of A, B and C. As used herein, "a member selected from the group consisting of A, B, and C" includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

Furthermore, the described features, structures, or characteristics described herein may be combined in any suitable manner. In the following description, numerous specific details are provided, such as examples of programming, software modules, user selections, network transactions, database queries, database structures, hardware modules, hardware circuits, hardware chips, etc., to provide a thorough understanding of the disclosure. One skilled in the relevant art will recognize, however, that the disclosed methods and apparatus may be practiced without one or more of the specific details, or with other methods, components, materials, and so forth. In other instances, well-known structures, materials, or operations are not shown or described in detail to avoid obscuring aspects of the disclosure.

Aspects of the disclosed method and apparatus are described below with reference to schematic flowchart diagrams and/or schematic block diagrams of methods, apparatuses, systems, and program products. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams.

The code may also be stored in a storage device that can direct a computer, other programmable data processing apparatus, or other devices to function in a particular manner, such that the instructions stored in the storage device produce an article of manufacture including instructions which implement the function/act specified in the schematic flowchart diagrams and/or schematic block diagrams.

The code may also be loaded onto a computer, other programmable data processing apparatus, or other devices to cause a series of operational steps to be performed on the computer, other programmable apparatus, or other devices to produce a computer implemented process such that the code which executes on the computer or other programmable apparatus provides processes for implementing the functions/acts specified in the schematic flowchart diagrams and/or schematic block diagram.

The schematic flowchart diagrams and/or schematic block diagrams in the Figures illustrate the architecture, functionality, and operation of possible implementations of apparatuses, systems, methods, and program products. In this regard, each block in the schematic flowchart diagrams and/or schematic block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

The description of elements in each figure may refer to elements of proceeding Figures. Like numbers refer to like elements in all Figures.

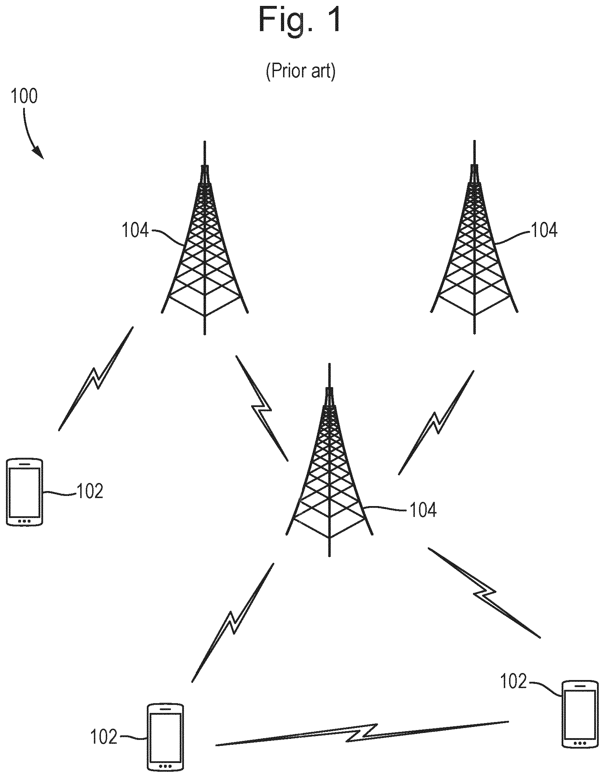

Figure 1 depicts an embodiment of a wireless communication system 100 for ## <TITLE>. In one embodiment, the wireless communication system 100 includes remote units 102 and network units 104. Even though a specific number of remote units 102 and network units 104 are depicted in Figure 1, one of skill in the art will recognize that any number of remote units 102 and network units 104 may be included in the wireless communication system 100.

In one embodiment, the remote units 102 may include computing devices, such as desktop computers, laptop computers, personal digital assistants ("PDAs"), tablet computers, smart phones, smart televisions (e.g., televisions connected to the Internet), set-top boxes, game consoles, security systems (including security cameras), vehicle on-board computers, network devices (e.g., routers, switches, modems), aerial vehicles, drones, or the like. In some embodiments, the remote units 102 include wearable devices, such as smart watches, fitness bands, optical head-mounted displays, or the like. Moreover, the remote units 102 may be referred to as subscriber units, mobiles, mobile stations, users, terminals, mobile terminals, fixed terminals, subscriber stations, UE, user terminals, a device, or by other terminology used in the art. The remote units 102 may communicate directly with one or more of the network units 104 via UL communication signals. In certain embodiments, the remote units 102 may communicate directly with other remote units 102 via sidelink communication.

The network units 104 may be distributed over a geographic region. In certain embodiments, a network unit 104 may also be referred to as an access point, an access terminal, a base, a base station, a Node-B, an eNB, a gNB, a Home Node-B, a relay node, a device, a core network, an aerial server, a radio access node, an AP, NR, a network entity, an Access and Mobility Management Function ("AMF"), a Unified Data Management Function ("UDM"), a Unified Data Repository ("UDR"), a UDM/UDR, a Policy Control Function ("PCF"), a Radio Access Network ("RAN"), an Network Slice Selection Function ("NSSF"), or by any other terminology used in the art. The network units 104 are generally part of a radio access network that includes one or more controllers communicably coupled to one or more corresponding network units 104. The radio access network is generally communicably coupled to one or more core networks, which may be coupled to other networks, like the Internet and public switched telephone networks, among other networks. These and other elements of radio access and core networks are not illustrated but are well known generally by those having ordinary skill in the art.

In one implementation, the wireless communication system 100 is compliant with New Radio (NR) protocols standardized in 3GPP, wherein the network unit 104 transmits using an Orthogonal Frequency Division Multiplexing ("OFDM") modulation scheme on the downlink (DL) and the remote units 102 transmit on the uplink (UL) using a Single Carrier Frequency Division Multiple Access ("SC-FDMA") scheme or an OFDM scheme. More generally, however, the wireless communication system 100 may implement some other open or proprietary communication protocol, for example, WiMAX, IEEE 802.11 variants, GSM, GPRS, UMTS, LTE variants, CDMA2000, Bluetooth^{®}, ZigBee, Sigfoxx, among other protocols. The present disclosure is not intended to be limited to the implementation of any particular wireless communication system architecture or protocol.

The network units 104 may serve a number of remote units 102 within a serving area, for example, a cell or a cell sector via a wireless communication link. The network units 104 transmit DL communication signals to serve the remote units 102 in the time, frequency, and/or spatial domain.

A user equipment apparatus (UE) may be registered to the 5GS without being authenticated and authorized for the UAS services. If the UE updates its aerial subscription to access UAS services, the UE may indicate or instruct that an Application Management Function (AMF) or Session Management Function (SMF) should trigger USS UAV Authorization/Authentication (UUAA). Since it may not be clear when the change of the UE's aerial subscription is implemented in the network, the UE may be unaware as to when to indicate to the AMF or the SMF to trigger UUAA. One solution to this problem could be that the UE, which is configured with Single Network Slice Selection Assistance Information (S-NSSAI) / Data Network Name (DNN) for the UAS service, performs trial and error by means of initial registration, mobility registration or PDU session establishment. However, this is not recommended, to avoid wasting network resources. Rather, it is desirable that the UE is informed when the network has updated the UE's aerial subscription to allow the UE to access the UAS services. The present application presents a solution to this problem.

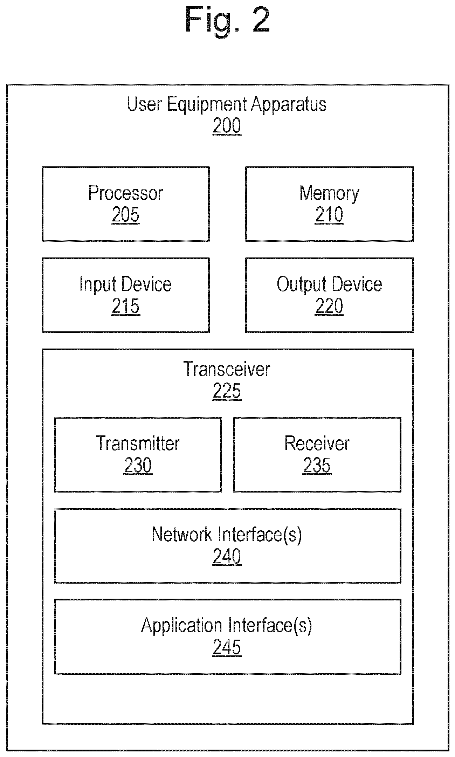

Figure 2 depicts a UE 200 that may be used for implementing the methods described herein. The UE 200 is used to implement one or more of the solutions described herein. The UE 200 is in accordance with one or more of the UEs described in embodiments herein. The UE 200 may be in accordance with the remote unit 102. The UE 200 includes a processor 205, a memory 210, an input device 215, an output device 220, and a transceiver 225.

The input device 215 and the output device 220 may be combined into a single device, such as a touchscreen. In some implementations, the UE 200 does not include any input device 215 and/or output device 220. The UE 200 may include one or more of: the processor 205, the memory 210, and the transceiver 225, and may not include the input device 215 and/or the output device 220.

As depicted, the transceiver 225 includes at least one transmitter 230 and at least one receiver 235. The transceiver 225 may communicate with one or more cells (or wireless coverage areas) supported by one or more base units. The transceiver 225 may be operable on unlicensed spectrum. Moreover, the transceiver 225 may include multiple UE panels supporting one or more beams. Additionally, the transceiver 225 may support at least one network interface 240 and/or application interface 245. The application interface(s) 245 may support one or more APIs. The network interface(s) 240 may support 3GPP reference points, such as Uu, N1, PC5, etc. Other network interfaces 240 may be supported, as understood by one of ordinary skill in the art.

The processor 205 may include any known controller capable of executing computer-readable instructions and/or capable of performing logical operations. For example, the processor 205 may be a microcontroller, a microprocessor, a central processing unit ("CPU"), a graphics processing unit ("GPU"), an auxiliary processing unit, a field programmable gate array ("FPGA"), or similar programmable controller. The processor 205 may execute instructions stored in the memory 210 to perform the methods and routines described herein. The processor 205 is communicatively coupled to the memory 210, the input device 215, the output device 220, and the transceiver 225.

The processor 205 may control the UE 200 to implement the UE behaviors described herein. The processor 205 may include an application processor (also known as "main processor") which manages application-domain and operating system ("OS") functions and a baseband processor (also known as "baseband radio processor") which manages radio functions.

The memory 210 may be a computer readable storage medium. The memory 210 may include volatile computer storage media. For example, the memory 210 may include a RAM, including dynamic RAM ("DRAM"), synchronous dynamic RAM ("SDRAM"), and/or static RAM ("SRAM"). The memory 210 may include non-volatile computer storage media. For example, the memory 210 may include a hard disk drive, a flash memory, or any other suitable non-volatile computer storage device. The memory 210 may include both volatile and non-volatile computer storage media.

The memory 210 may store data related to implement a traffic category field as described herein. The memory 210 may also store program code and related data, such as an operating system or other controller algorithms operating on the apparatus 200.

The input device 215 may include any known computer input device including a touch panel, a button, a keyboard, a stylus, a microphone, or the like. The input device 215 may be integrated with the output device 220, for example, as a touchscreen or similar touch-sensitive display. The input device 215 may include a touchscreen such that text may be input using a virtual keyboard displayed on the touchscreen and/or by handwriting on the touchscreen. The input device 215 may include two or more different devices, such as a keyboard and a touch panel.

The output device 220 may be designed to output visual, audible, and/or haptic signals. The output device 220 may include an electronically controllable display or display device capable of outputting visual data to a user. For example, the output device 220 may include, but is not limited to, a Liquid Crystal Display ("LCD"), a Light-Emitting Diode ("LED") display, an Organic LED ("OLED") display, a projector, or similar display device capable of outputting images, text, or the like to a user. As another, non-limiting, example, the output device 220 may include a wearable display separate from, but communicatively coupled to, the rest of the UE 200, such as a smart watch, smart glasses, a heads-up display, or the like. Further, the output device 220 may be a component of a smart phone, a personal digital assistant, a television, a table computer, a notebook (laptop) computer, a personal computer, a vehicle dashboard, or the like.

The output device 220 may include one or more speakers for producing sound. For example, the output device 220 may produce an audible alert or notification (e.g., a beep or chime). The output device 220 may include one or more haptic devices for producing vibrations, motion, or other haptic feedback. All, or portions, of the output device 220 may be integrated with the input device 215. For example, the input device 215 and output device 220 may form a touchscreen or similar touch-sensitive display. The output device 220 may be located near the input device 215.

The transceiver 225 communicates with one or more network functions of a mobile communication network via one or more access networks. The transceiver 225 operates under the control of the processor 205 to transmit messages, data, and other signals and also to receive messages, data, and other signals. For example, the processor 205 may selectively activate the transceiver 225 (or portions thereof) at particular times in order to send and receive messages.

The transceiver 225 includes at least one transmitter 230 and at least one receiver 235. The one or more transmitters 230 may be used to provide uplink communication signals to a base unit of a wireless communications network. Similarly, the one or more receivers 235 may be used to receive downlink communication signals from the base unit. Although only one transmitter 230 and one receiver 235 are illustrated, the UE 200 may have any suitable number of transmitters 230 and receivers 235. Further, the transmitter(s) 230 and the receiver(s) 235 may be any suitable type of transmitters and receivers. The transceiver 225 may include a first transmitter/receiver pair used to communicate with a mobile communication network over licensed radio spectrum and a second transmitter/receiver pair used to communicate with a mobile communication network over unlicensed radio spectrum.

The first transmitter/receiver pair may be used to communicate with a mobile communication network over licensed radio spectrum and the second transmitter/receiver pair used to communicate with a mobile communication network over unlicensed radio spectrum may be combined into a single transceiver unit, for example a single chip performing functions for use with both licensed and unlicensed radio spectrum. The first transmitter/receiver pair and the second transmitter/receiver pair may share one or more hardware components. For example, certain transceivers 225, transmitters 230, and receivers 235 may be implemented as physically separate components that access a shared hardware resource and/or software resource, such as for example, the network interface 240.

One or more transmitters 230 and/or one or more receivers 235 may be implemented and/or integrated into a single hardware component, such as a multi-transceiver chip, a system-on-a-chip, an Application-Specific Integrated Circuit ("ASIC"), or other type of hardware component. One or more transmitters 230 and/or one or more receivers 235 may be implemented and/or integrated into a multi-chip module. Other components such as the network interface 240 or other hardware components/circuits may be integrated with any number of transmitters 230 and/or receivers 235 into a single chip. The transmitters 230 and receivers 235 may be logically configured as a transceiver 225 that uses one more common control signals or as modular transmitters 230 and receivers 235 implemented in the same hardware chip or in a multi-chip module.

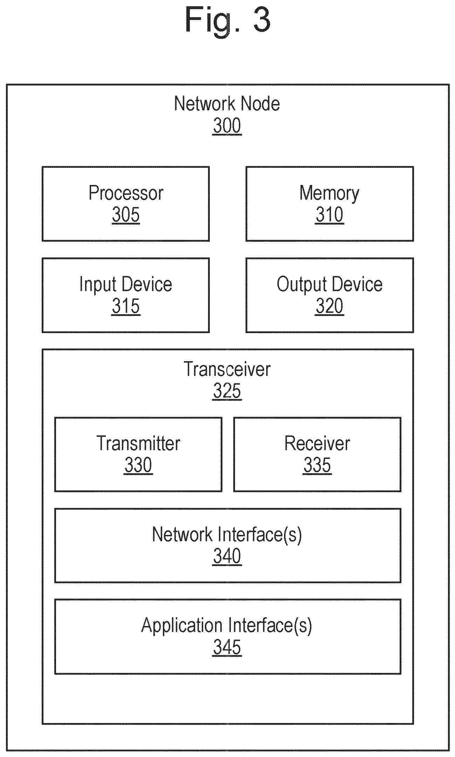

Figure 3 depicts a network node 300 that may be used for implementing the methods described herein. The network node 300 may be one implementation of an entity in the wireless communications network, e.g. in one or more of the wireless communications networks described herein.. The network node 300 may be, for example, the UE 200 described above, or the network unit 104, or a Network Function (NF) or Application Function (AF), or another entity, of one or more of the wireless communications networks of embodiments described herein. The network node 300 includes a processor 305, a memory 310, an input device 315, an output device 320, and a transceiver 325.

The input device 315 and the output device 320 may be combined into a single device, such as a touchscreen. In some implementations, the network node 300 does not include any input device 315 and/or output device 320. The network node 300 may include one or more of: the processor 305, the memory 310, and the transceiver 325, and may not include the input device 315 and/or the output device 320.

As depicted, the transceiver 325 includes at least one transmitter 330 and at least one receiver 335. Here, the transceiver 325 communicates with one or more remote units 200. Additionally, the transceiver 325 may support at least one network interface 340 and/or application interface 345. The application interface(s) 345 may support one or more APIs. The network interface(s) 340 may support 3GPP reference points, such as Uu, N1, N2 and N3. Other network interfaces 340 may be supported, as understood by one of ordinary skill in the art.

The processor 305 may include any known controller capable of executing computer-readable instructions and/or capable of performing logical operations. For example, the processor 305 may be a microcontroller, a microprocessor, a CPU, a GPU, an auxiliary processing unit, a FPGA, or similar programmable controller. The processor 305 may execute instructions stored in the memory 310 to perform the methods and routines described herein. The processor 305 is communicatively coupled to the memory 310, the input device 315, the output device 320, and the transceiver 325.

The memory 310 may be a computer readable storage medium. The memory 310 may include volatile computer storage media. For example, the memory 310 may include a RAM, including dynamic RAM ("DRAM"), synchronous dynamic RAM ("SDRAM"), and/or static RAM ("SRAM"). The memory 310 may include non-volatile computer storage media. For example, the memory 310 may include a hard disk drive, a flash memory, or any other suitable non-volatile computer storage device. The memory 310 may include both volatile and non-volatile computer storage media.

The memory 310 may store data related to establishing a multipath unicast link and/or mobile operation. For example, the memory 310 may store parameters, configurations, resource assignments, policies, and the like, as described herein. The memory 310 may also store program code and related data, such as an operating system or other controller algorithms operating on the network node 300.

The input device 315 may include any known computer input device including a touch panel, a button, a keyboard, a stylus, a microphone, or the like. The input device 315 may be integrated with the output device 320, for example, as a touchscreen or similar touch-sensitive display. The input device 315 may include a touchscreen such that text may be input using a virtual keyboard displayed on the touchscreen and/or by handwriting on the touchscreen. The input device 315 may include two or more different devices, such as a keyboard and a touch panel.

The output device 320 may be designed to output visual, audible, and/or haptic signals. The output device 320 may include an electronically controllable display or display device capable of outputting visual data to a user. For example, the output device 320 may include, but is not limited to, an LCD display, an LED display, an OLED display, a projector, or similar display device capable of outputting images, text, or the like to a user. As another, non-limiting, example, the output device 320 may include a wearable display separate from, but communicatively coupled to, the rest of the network node 300, such as a smart watch, smart glasses, a heads-up display, or the like. Further, the output device 320 may be a component of a smart phone, a personal digital assistant, a television, a table computer, a notebook (laptop) computer, a personal computer, a vehicle dashboard, or the like.

The output device 320 may include one or more speakers for producing sound. For example, the output device 320 may produce an audible alert or notification (e.g., a beep or chime). The output device 320 may include one or more haptic devices for producing vibrations, motion, or other haptic feedback. All, or portions, of the output device 320 may be integrated with the input device 315. For example, the input device 315 and output device 320 may form a touchscreen or similar touch-sensitive display. The output device 320 may be located near the input device 315.

The transceiver 325 includes at least one transmitter 330 and at least one receiver 335. The one or more transmitters 330 may be used to communicate with the UE, as described herein. Similarly, the one or more receivers 335 may be used to communicate with network functions in the PLMN and/or RAN, as described herein. Although only one transmitter 330 and one receiver 335 are illustrated, the network node 300 may have any suitable number of transmitters 330 and receivers 335. Further, the transmitter(s) 330 and the receiver(s) 335 may be any suitable type of transmitters and receivers.

Although it has not been defined yet, a Network Remote (NR) capable for UAC services can support similar functionalities as identified in 3GPP TS 36.300 v17.1.0 for the Evolved Packet System (EPS) capable for UAV services. These functionalities are:
- height reporting in the event that a UE's altitude has crossed a network-configured reference altitude threshold;
- interference detection based on a measurement report that is triggered when a configured multiple cells simultaneously fulfil the triggering criteria;
- signalling of flight path information from a UE to the NR;
- location information reporting, including reporting on the UE's horizontal and vertical velocity;
- open loop power control enhancements, including a UE specific pathloss compensation factor and an extended range of nominal target received power.

The UAV uses 3GPP access (i.e. EPS & 5GS) for 3GPP UAV related operations.

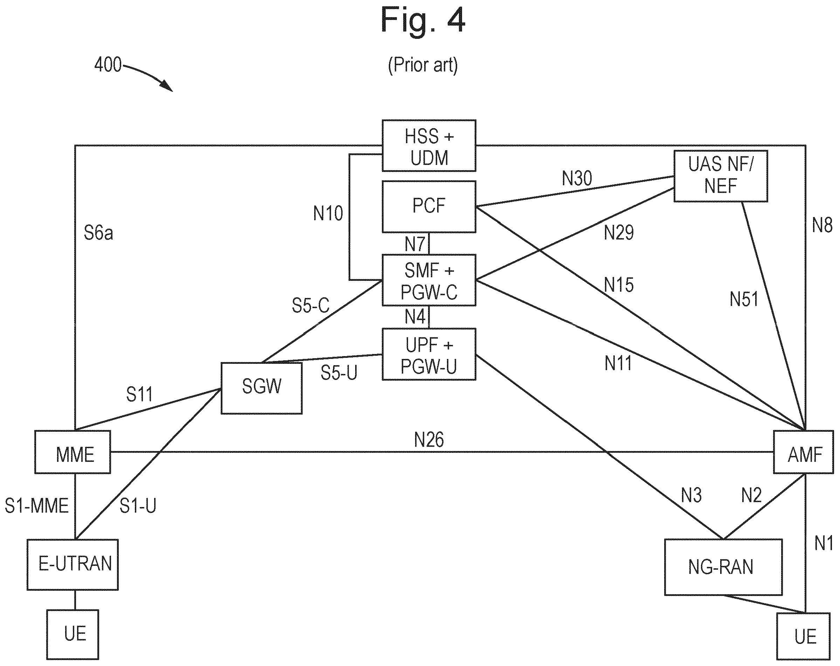

Figure 4 depicts an architecture 400 in which a SMF and PDN Gateway-C (PGW-C) implements the functions as defined in 3GPP TS 23.501 v17.7.1. In particular, the SMF and PGW-C:
- triggers an UUAA-SM procedure for a UE requiring UAV authentication and authorization by a USS when requesting user plane resources for UAV operation, or when the USS / Uncrewed Aerial System Traffic Management (UTM) that authenticated the UAV triggers a re-authentication; and
- may trigger the authorization of pairing between a UAV and a networked UAVC or a UAVC that connects to the UAV via internet connectivity during the establishment of the PDN connection/PDU session for C2 communication.
The SMF and PGW-C also has access to the HSS and UDM, where it can access the UE's aerial subscription information from the HSS via the UDM.

The SMF+PGW-C also has access to a Home Subscriber Server (HSS) and a Unified Data Management (UDM), whereby it can access the UE's aerial subscription information from the HSS via the UDM.

Figure 4 is useful to the skilled person in providing an overview of the architecture 400 for interworking between the 5GS and the Evolve Packet Core (EPC) / Evolved Universal Terrestrial Radio Access Network (E-UTRAN).

Methods and apparatuses according to the present invention may include the following features.

Due to subscription by the AMF to notification by the UDM of the status of access and mobility subscription data, upon any change or update to:
- the UE's aerial subscription status;
- the S-NSSAI for accessing the UAS services; or
- the DNN for accessing the UAS service,
the AMF will be notified as such by the UDM. The reason for this is that the Nudm_SubscriberDataManagement Service API which is used for this notification supports a data model with an access and mobility subscription data (AccessAndMobilitySubscriptionData) type comprising:
- the UE's aerial subscription information as the attribute aerialUeSubInfo;
- the UE's list of subscribed S-NSSAI as the attribute NSSAI; and
- the UE's list of the subscribed DNNs as the attribute subscribedDnnList,

This support is outlined in 3GPP TS 29.503 v17.7.0.

The UE, without UUAA due to lack of an aerial subscription, can be updated on the UE's aerial subscription information and S-NSSAI related to the UAS services. The UE may indicate or confirm the UUAA by:
- executing a registration procedure for mobility registration and including the Civil Aviation Administration (CAA) -level UAV ID and related UAS services in the registration message; or
- establishing a PDU session and including the CAA-level UAV ID and related parameters for UAS service in the PDU session establishment message.

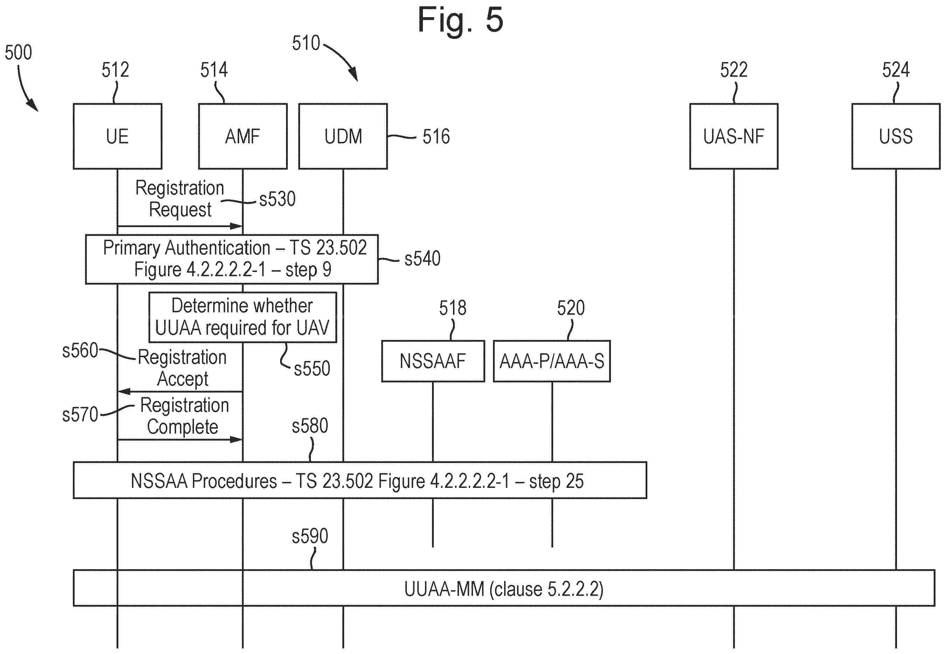

Figure 5, which is the same as Figure 5.2.2.1-1 in 3GPP TS 23.256 v17.3.0, depicts the known UUAA procedure 500 at the time of initial registration.

The procedure 500 may be performed in an architecture 510 which comprises a UE 512, an AMF 514, a UDM 516, a Network Slice Specific Authentication and Authorization Function (NSSAAF) 518, an Authentication, Authorization and Accounting (AAA)-Proxy or Authentication, Authorization and Accounting (AAA)-Server 520, a UAS network function (UAS-NF) 522, and a USS 524.

At step s530, the UE 512 sends a registration request to the AMF 514.

At step s540, the UE 512, AMF 514 and UDM 516 undergo primary authentication as per 3GPP TS 23.502 v17.5.0, Figure 4.2.2.2.2-1 - step 9.

At step s550, the AMF 514 determines whether UUAA is required for UAV services.

At step s560, the AMF 514 sends a registration acceptance message to the UE 512.

At step s570, the UE 512 sends a registration completed message to the AMF 514.

At step s580, NSSAA procedures are executed in accordance with 3GPP TS 23.502 v17.5.0, Figure 4.2.2.2.2-1 - step 25.

At step s590, the actual UUAA is performed, which may fail due to the lack of aerial subscription with no allowed S-NSSAI and DNN for the UAS services in the list of subscribed S-NSSAIs and DNNs.

According to 3GPP TS 23.256 v17.3.0, if the procedure for UUAA is not successful due to the local network policy, the AMF 514 may let the UE 512 be registered, but the UE 512 shall not be allowed to access any aerial service. In particular, 3GPP TS 23.256 v17.3.0 makes clear that, if the UUAA fails, based on local network policy, the AMF 514 may decide to de-register the UE 512 with an appropriate cause value in the De-Registration Request message, or keep the UE registered with a failure UUAA result in a UE context as described in step 7 of clause 5.2.2.2, thereby ensuring that the UE 512 is not allowed to access any aerial service based on the DNN/S-NSSAI value.

In such a case, the UE 512 is not allowed to establish a PDU session for UAS services as the AMF 514 would not allow the S-NSSAI and DNN to be used by the UE 512. There may therefore be a need for a change in UE's aerial subscription such that the UE 512 can re-trigger the UUAA procedure s580. Additionally, the S-NSSAI needs to be an allowed S-NSSAI in the Public Land Mobile Network (PLMN) where the UE 512 is located.

There may be a case in which the UE 512 is registered to the 5GS network without being authenticated and authorized for the UAS services due to, for example, lack of an aerial subscription. If the UE's subscription information is updated, the UE 512 may initiate the UUAA procedure s580 once the UE 512 receives information indicating that the network knows about the UE's updated aerial subscription.

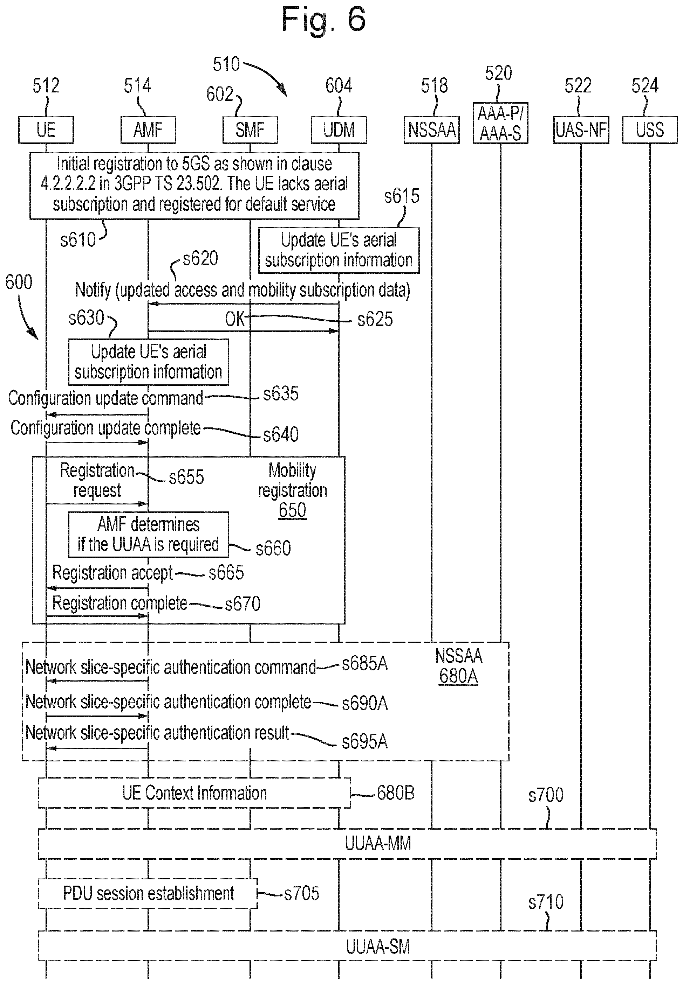

The UE 512 which does not have a valid aerial subscription may nonetheless be registered to the 5GS for other services. Figure 6 depicts a procedure 600 performable by the architecture 510 by which the AMF 514 provides the UE 512 with information that the UE 512 is permitted to instruct or cause the AMF 514 or an SMF 602 to trigger the UUAA due to a change in aerial subscription status.

In this embodiment, the architecture 510 further comprises a UDM 604.

As a precondition for the procedure 600, at step s610 the UE 512 is registered to the 5GS according to clause 4.2.2.2.2 of 3GPP TS 23.502 v17.5.0. As the UE 512 lacks the aerial subscription for the UAS services, the UE 512 may be registered for default service only, e.g. have default IP access using a default S-NSSAI and a default DNN.

At step s615, an update in the UE's aerial subscription information occurs at the UDM 604, thereby to permit the UE 512 to access the UAS services. For example, this update may have been done as a promotion by the operator, or the user may have paid for one or more of the UAS services to be activated.

At step s620, since the AMF 514 has subscribed to the subscription data management for the UE 512 and the UE's aerial subscription information and the UE's list of subscribed DNN/S-NSSAI are parts of the UE's subscription data management, the AMF 514 will be notified about the change of the UE's subscription information data. The AMF 514 may return, at step s625, a confirmation message following notification.

At step s630, the AMF 514 updates the access and mobility subscription data of the UE 512, the data comprising the attributes which are the associated to the UE's aerial subscription information. The AMF 514 therefore updates the UE's aerial subscription information such that the UE 512 is thereafter allowed to use one or more of the UAS services.

Due to the update of the aerial subscription and the new list of subscribed S-NSSAIs, the AMF 514 next triggers a CONFIGURATION UPDATE procedure to transmit to the UE 512 a new configured NSSAI comprising the updated subscribed S-NSSAIs (and if applicable mapped HPLMN S-NSSAI values). The AMF 514 may, in addition, transmit to the UE 512 a new indication that aerial services/subscription are enabled for the UE 512, as per clause 5.1 of 3GPP TS 23.502 v17.5.0. In particular, the AMF 514 initiates the UE CONFIGURATION UPDATE procedure by constructing a CONFIGURATION UPDATE COMMAND message as defined in 3GPP TS 24.501 v17.7.1, comprising the Configured NSSAI IE including the S-NSSAI and/or the indication that aerial services are enabled for the UE 512. The AMF 514 may comprise a CONFIGURATION UPDATE INDICATION information element (IE) set to the value "registration requested".

Thus, at step s635, the AMF 514 sends the CONFIGURATION UPDATE COMMAND message towards the UE 512 and may start the timer T3555 if it requests an acknowledgment from the UE 512 by setting the acknowledgement bit in the CONFIGURATION UPDATE INDICATION IE to the value "acknowledgment requested".

If an acknowledgement is requested by the AMF 514, the UE 512 transmits, at step s640, a CONFIGURATION UPDATE COMPLETE message to the AMF 514, as defined in 3GPP TS 24.501 v17.7.1. The AMF 514 stops timer T3555 upon receipt of the CONFIGURATION UPDATE COMPLETE message. T3555 is a timer which is used in UE configuration update procedure if the AMF requests an acknowledgement. Within that duration, the AMF expects the acknowledgement, otherwise the AMF retransmits the CONFIURATION UPDATE COMMAND message. T3555 for 5G is 6 seconds.

The procedure 600 further comprises a mobility registration procedure 650, in which the UE is updated by the S-NSSAI being in the configured NSSAI.

Since the indication that the subscription is updated as described herein, or that the aerial services are enabled as described herein, is received, the UE 512 may determine to initiate the new registration procedure 650 and include the CAA-level UAV ID in a registration request message. Since the UE 512 understands that the S-NSSAI is for the UAS services, the UE 512 sends, at step s655, a registration request message to the AMF 514, the message comprising the configured NSSAI with the S-NSSAI, and may provide the CAA-level UAV ID to instruct or indicate the AMF 514 to trigger UUAA-MM. The UE 512 may also provide the USS address to the AMF 514.

If providing the CAA-level UAV ID to instruct or indicate that the AMF 514 triggers UUAA, the AMF 514 determines, at step s660, whether the UUAA is required for the UE 512 by checking if:
- the UE 512 has valid aerial subscription information;
- local policy allows that the UUAA be performed during registration; and
- there isn't any successful UUAA result from a previous UUAA-MM procedure.

Once the AMF 514 confirms that the UUAA-MM is required, the AMF 514 provides, at step s665, the UE 512 with a pending UUAA indication by including a Service-level-AA pending indication IE in a REGISTRATION ACCEPT message as described in 3GPP TS 24.501 v17.7.1. The pending indication is interpreted by the UE 512 as indicating that the UE 512 is required to wait for completion of the UUAA procedure without attempting to register for UAS services or to establish user plane connectivity to the USS 524 or UAV-C. The AMF 514 stores a UUAA pending notification in a UE context.

At step s670 of the mobility registration procedure 650, the UE 512 completes the transaction by transmitting a REGISTRATION COMPLETE towards the AMF 514.

In a first example, indicated by the reference numeral 680A, if the AMF 514 knows that the UE 512 supports a network specific-slice authentication and authorization (NSSAA) by virtue of the UE 512 indicating as such in a 5GMM IE (as described in 3GPP TS 24.501 v17.7.1), the AMF 514 may, based on a change of aerial subscription information, initiate the NSSAA procedure for the S-NSSAI for access to the UAS services, as described in clause 4.2.9.2 of 3GPP TS 23.502 v17.5.0. In particular, the AMF 514 sends, at step s685A, a NETWORK SLICE-SPECIFIC AUTHENTICATION COMMAND message comprising:
- an extensible authentication protocol (EAP) message IE set to an EAP request message; and
- an S-NSSAI IE including the S-NSSAI for the UAS services.

Upon transmission of the NETWORK SLICE-SPECIFIC AUTHENTICATION COMMAND message at step s685A, the AMF 514 starts T3575 as described in 3GPP TS 24.501 v17.7.1. T3575 is a timer which is used in the network slice-specific authorization and authentication procedure. Within that duration, the AMF expects the acknowledgement, otherwise the AMF retransmits the NETWORK SLICE-SPECIFIC AUTHENTICATION COMMAND message. T3575 for 5G is 15 seconds. In particular, the AMF 514 receives, at step s690A, from the UE 512, a NETWORK SLICE-SPECIFIC AUTHENTICATION COMPLETE message.

The NETWORK SLICE-SPECIFIC AUTHENTICATION COMPLETE message comprises:
- EAP message IE set to EAP response message; and
- an S-NSSAI information element including the S-NSSAI for the UAS services.

Upon receipt of the NETWORK SLICE-SPECIFIC AUTHENTICATION COMPLETE message at step s690A, the AMF 514 stops the timer T3575 and reports the output to the NSSAA 518 or the AAA-P/AAA-S 520.

The transmission of the NETWORK SLICE-SPECIFIC AUTHENTICATION COMMAND message (at step s685A) and the NETWORK SLICE-SPECIFIC AUTHENTICATION COMPLETE (at step s690A) message may be executed several times.

Upon successful procedure for the authentication, the network transmits, at step s695A, a NETWORK SLICE-SPECIFIC AUTHENTICATION RESULT message to the UE 512.

In another example, indicated by the reference numeral 680B, if the AMF 514 knows that the UE 512 does not support the NSSAA since the UE 512 does not indicate said support in the 5GMM IE as described in 3GPP TS 24.501 v17.7.1. The UE context information includes one or more HPLMN S-NSSAIs corresponding to the allowed NSSAI, which may include the S-NSSAI.

If the S-NSSAI for the UAS service is part of the allowed NSSAIs and the AMF 514 has triggered the UUAA-MM, the UUAA-MM is executed, at step s700, as described in clause 5.2.2.2 in 3GPP TS 23.256 v17.3.0. Once the UUAA-MM procedure is successfully completed for the UAV, the AMF 514 stores a successful UUAA result and updates the UE context to indicate that the UUAA is no longer pending and further indicate the authorized CAA-Level UAV ID, if provided by the USS 524. In accordance with step 6 in Figure 5.2.2.1-1 of 3GPP TS 23.256 v17.3.0, the AMF 514 triggers the UE CONFIGURATION UPDATE procedure as described in clause 4.2.4.2 of 3GPP TS 23.502 v17.5.0 to deliver the UUAA result and related information to the USS 524.

If the UE 512 did not indicate the UUAA-MM in the registration request message at step s655, or if the AMF 514 is not allowed to trigger the UUAA-MM according to the local policy, and if the S-NSSAI for the UAS service is part of the allowed NSSAI, the UE 512 may instruct or indicate the SMF 602 to trigger the UUAA-SM by the UE 512 first, at step s705, establishing a PDU session. In a PDU session establishment request, the UE 512 provides the CAA-level UAV ID of the UAV and may provide other necessary information for UAS services, such as a USS address to instruct or indicate that the SMF 602 triggers the UUAA-SM. The AMF 514 checks for an aerial subscription and S-NSSAI/DNN for the UAS services and forwards the message towards the SMF 602.

At step s710, the SMF 602 initiates the UUAA-SM procedure. In particular, the SMF 602 identifies the UAS NF 522 / NEF based on a local configuration or by an NF discovery procedure, using a DNN/S-NSSAI and/or a UE-provided identity, e.g. the USS address. Multiple round-trip messages may be required depending on the authentication method used by the USS 524. Steps outlined in clause 5.2.3.2 of 3GPP TS 23.256 v17.3.0 describes the UUAA-SM procedure, whereby the UUAA result and the authorized CAA-Level UAV ID are sent by the SMF 602 to the UE 512.

Thus, a procedure 600 is provided for USS UAV Authorization/Authentication including a mobility registration procedure (UUAA-MM) and a PDU session establishment procedure (UUAA-SM).

In an embodiment of the procedure 600, there is a change in the subscription. In this embodiment, the AMF 514 may include the NSSAI IE, as defined in 3GPP TS 24.501 v17.7.1, with the value set to "Network slicing subscription changed" in the CONFIGURATION UPDATE COMMAND message (sent at step s635). This may, e.g. automatically, require that the CONFIGURATION UPDATE COMMAND message comprises the Configuration update indication IE with the value set to "Registration requested", as per 3GPP TS 24.501 v17.7.1.

Due to the new configured NSSAI, and the knowledge of the UE 512 of this updated NSSAI, the UE 512 may initiate the mobility registration update procedure (as per s700) and include the S-NSSAI associated with the UAS services in the Requested NSSAI IE in the REGISTRATION REQUEST message (sent at s655). The UE 512 may also instruct the AMF 514 by including a Service-level-AA container IE which includes a Service-level-AA device ID set to the value of the CAA-level UAV ID of the UE 512, such that the AMF 514 triggers the UUAA-MM if the local policy allows.

In another embodiment of the procedure 600, the AMF 514 may include the Service-level-AA container IE in the CONFIGURATION UPDATE COMMAND message to indicate that the aerial subscription is enabled. This indication may be a new IE and may be a type 1 IE as specified in 3GPP TS 24.007 v17.3.0. The Service-level-AA container IE defined in 3GPP TS 24.501 v17.7.1.

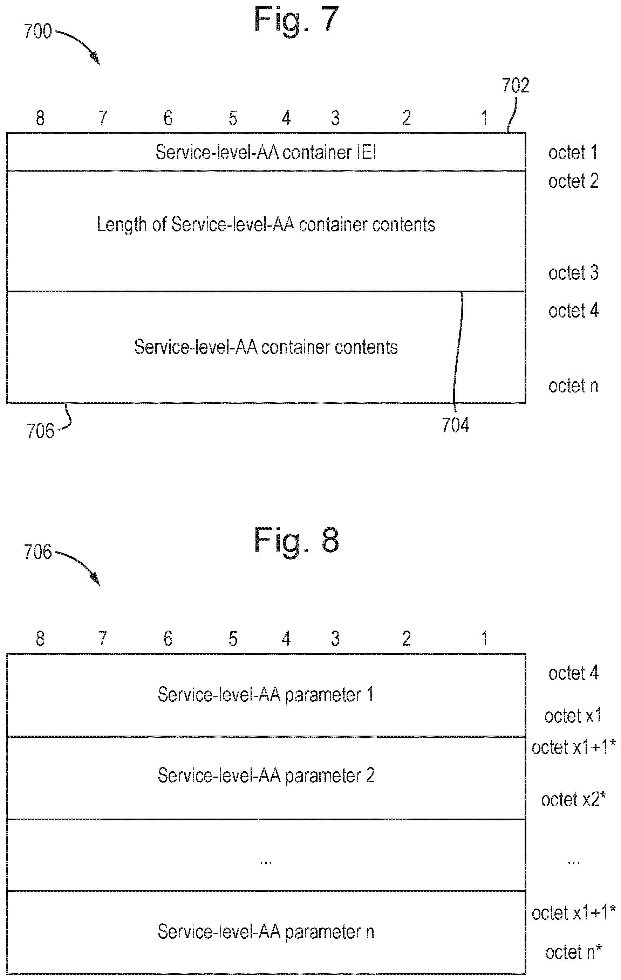

Figure 7 depicts a Service-level AA container IE 700. The Service-level AA container IE 700 comprises a Service-level AA container information element identifier IEI 702, a length of Service-level AA container contents 704, and a Service-level AA container contents 706.

Figure 8 depicts the Service-level AA container contents 706 having a number of octets n.

The Service-level-AA container IE defined in 3GPP TS 24.501 v17.7.1 and referred to with respect to procedure 600 above has a contents having a length of 5 octets.

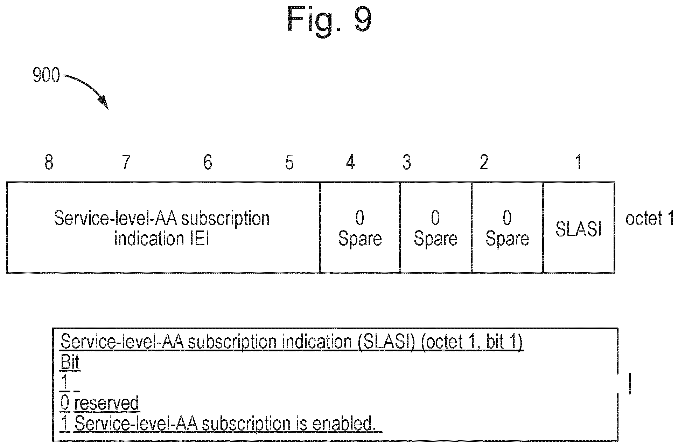

The new AMF indication for enabled subscription may be referred to as a Service-level-AA subscription indication IE, which is a type 1 IE and is defined as in Figure 9.

Figure 9 depicts a Service-level AA subscription indication 900.

Upon reception of the Service-level-AA container IE with the Service-level-AA subscription indication SLASI set to the value "Service-level-AA subscription is enabled", the UE 512 may initiate the mobility registration update procedure and include the S-NSSAI associated with the UAS services in the Requested NSSAI IE in the REGISTRATION REQUEST message. The UE 512 may also instruct the AMF 514 by including the Service-level-AA container IE 700 which comprises a Service-level-AA device ID set to the value of CAA-level UAV ID of the UE 512, such that the AMF 514 triggers the UUAA-MM procedure (at step s700), if the local policy allows.

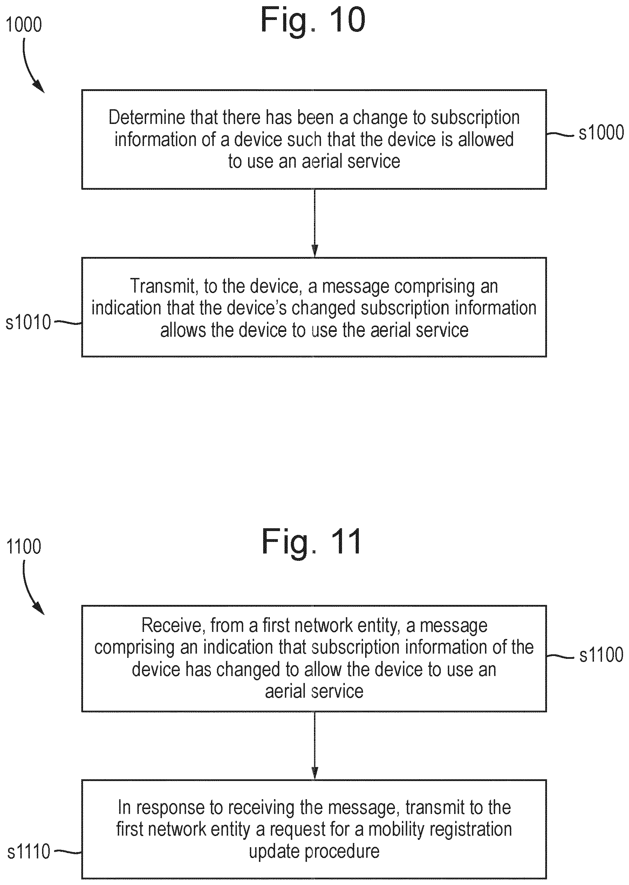

Figure 10 is process flow chart depicting steps of a method 1000 to be performed by a first network entity, e.g. the AMF 514 of the above embodiments.

The method 1000 includes, at step s1000, determining that there has been a change to subscription information of a device (e.g., the UE 512) such that the device is allowed to use an aerial service.

The method 1000 includes, at step s1010, transmitting, to the device, a message comprising an indication that the device's changed subscription information allows the device to use the aerial service.

The indication may comprise a new S-NSSAI for the aerial service and/or a Service-Level-AA subscription indication.

The first network entity may be an AMF (e.g. in accordance with the AMF 514) and the device may be a UE (e.g. in accordance with the UE 512).

The S-NSSAI may be a part of a configured NSSAI.

The aerial service may be a UAS service (e.g. in accordance with the above embodiments).

The subscription information may comprise aerial subscription information.

The method may further comprise subscribing to the subscription information of the device.

The first network entity may subscribe to the subscription information with a second network entity, e.g. the UDM 604 of the above embodiments.

The second network entity may be a UDM (e.g. the UDM 604).

The first network entity may subscribe to the subscription information at a time of the device's registration to a 5GS via the first network entity.

The subscription information may be, or include, access and mobility subscription data.

Thus, a method 1000 is provided for informing a device of an update in an aerial subscription for uncrewed aerial system services.

Figure 11 is a process flow chart depicting steps of a further method 1100 performed by a device, e.g. the UE 512 of the above embodiments.

The further method 1100 includes, at step s1100, receiving, from a first network entity (e.g. the AMF 514), a message comprising an indication that subscription information of the device has changed to allow the device to use an aerial service.

The further method 1100 further includes, at step s1110, in response to receiving the message, transmitting to the first network entity a request for a mobility registration update procedure.

The request may comprise an indicator for the first network entity to trigger a first authorization and authentication procedure for the aerial service.

The request may comprise a requested NSSAI comprising the S-NSSAI for the subscription for the aerial service.

The first authorization and authentication procedure for the aerial service may be UUAA-MM (e.g., in accordance with the above embodiments).

The device may request PDU session establishment by indicating to a third network entity (e.g., the SMF 602) to trigger a second authorization and authentication procedure for the aerial service.

Thus, a further method 1100 is provided for a device to request, i.e. initiate, a mobility registration update procedure.

In an embodiment, there is provided a first network entity, e.g. the AMF 514 in accordance with the above embodiments, comprising a processor configured to determine that there has been a change to subscription information of a device (e.g., the UE 512) such that the device is allowed to use an aerial service.

In this embodiment, the first network entity further comprises a transmitter configured to transmit, to the device, a message comprising an indication that the device's changed subscription information allows the device to use the aerial service.

In another embodiment, there is provided a device, e.g. the UE 512 in accordance with the above embodiments, comprising a receiver configured to receive, from a first network entity (e.g. the AMF 514), a message comprising an indication that subscription information of the device has changed to allow the device to use an aerial service.

In this embodiment, the device further comprises a transmitter configured to, in response to receiving the message, transmit to the first network entity a request for a mobility registration update procedure.

According to the above embodiments, if, from (e.g., changes in) the subscription data management for the UE at the UDM, the AMF realizes that there is an update in the UE's aerial subscription information which allows the UE to use the UAS services, the AMF transmits to the UE (by the CONFIGURATION UPDATE COMMAND message) the Configured NSSAI IE comprising the S-NSSAI for the UAS services and/or a new indication that aerial services/subscription are enabled for the UE. Advantageously, the methods and apparatuses described herein tend to allow for the UE to be actively informed of network updates which would allow the UE to use UAS services, rather than require the UE to perform trial and error to subscribe for UAS services. Thus, network resources tend to be conserved, i.e. not wasted on fruitless periodic authorization attempts.

According to the above embodiments, if the UE receives a CONFIGURATION UPDATE COMMAND message comprising the Configured NSSAI IE including the S-NSSAI for the UAS services and/or a new indication that aerial services/subscription are enabled for the UE, the UE is able to recognize the S-NSSAI associated with the UAS service. Thus, the UE (e.g. based on the indication that aerial services/subscription are enabled for the UE) may indicate to the AMF the CAA-Level UAV ID by performing mobility registration (according to clause 5.2.2.2 in 3GPP TS 23.256 v17.3.0). If the UE so-chooses, or if the network policy does not allow UUAA-MM, the UE, after executing the mobility registration update and getting confirmation that the S-NSSAI associated with the UAS service is part of the allowed NSSAI, may instruct the SMF to trigger UUAA-SM, by way of establishing a PDU session through the UE according to clause 5.2.3.2 in 3GPP TS 23.256 v17.3.0.

It should be noted that the above-mentioned methods and apparatus illustrate rather than limit the invention, and that those skilled in the art will be able to design many alternative arrangements without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

Further, while examples have been given in the context of particular communications standards, these examples are not intended to be the limit of the communications standards to which the disclosed method and apparatus may be applied. For example, while specific examples have been given in the context of 3GPP, the principles disclosed herein can also be applied to another wireless communications system, and indeed any communications system which uses routing rules.

The method may also be embodied in a set of instructions, stored on a computer readable medium, which when loaded into a computer processor, Digital Signal Processor (DSP) or similar, causes the processor to carry out the hereinbefore described methods.

The described methods and apparatus may be practiced in other specific forms. The described methods and apparatus are to be considered in all respects only as illustrative and not restrictive. The scope of the invention is, therefore, indicated by the appended claims rather than by the foregoing description.

## Claims

1. A method (1000) performed by a first network entity, the method comprising:
determining (s1000) that there has been a change to subscription information of a device such that the device is allowed to use an aerial service; and
transmitting (s1010), to the device, a message comprising an indication that the device's changed subscription information allows the device to use the aerial service, wherein the indication comprises a Service-Level-AA subscription indication.

2. The method (1000) of claim 1, wherein the indication comprises a new S-NSSAI for the aerial service.

3. The method (1000) of claim 1 or 2, wherein the first network entity is an AMF and the device is a UE.

4. The method (1000) of claim 2 or 3, wherein the new S-NSSAI is part of a configured NSSAI.

5. The method (1000) of any preceding claim, wherein the aerial service is a UAS service.

6. The method (1000) of any preceding claim, wherein the subscription information comprises aerial subscription information.

7. The method (1000) of any preceding claim, further comprising:
subscribing to the subscription information of the device.

8. The method (1000) of claim 6, wherein the first network entity subscribes to the subscription information with a second network entity.

9. The method (1000) of claim 8, wherein the second network entity is a UDM.

10. The method (1000) of any of claims 7 to 9, wherein the first network entity subscribes to the subscription information at a time of the device's registration to a 5GS via the first network entity.

11. The method (1000) of any preceding claim, wherein the subscription information is access and mobility subscription data.

12. A method (1100) performed by a device, the method comprising:
receiving (s1100), from a first network entity, a message comprising an indication that subscription information of the device has changed to allow the device to use an aerial service, wherein the indication comprises a Service-Level-AA subscription indication; and
in response to receiving the message, transmitting (s1110) to the first network entity a request for a mobility registration update procedure.

13. The method (1100) of claim 12, wherein the request comprises an indicator for the first network entity to trigger a first authorization and authentication procedure for the aerial service.

14. A first network entity (300) comprising:
a processor (305) configured to determine that there has been a change to subscription information of a device (200) such that the device is allowed to use an aerial service; and
a transmitter (330) configured to transmit, to the device, a message comprising an indication that the device's changed subscription information allows the device to use the aerial service, wherein the indication comprises a Service-Level-AA subscription indication.

15. A device (200) comprising:
a receiver (235) configured to receive, from a first network entity (300), a message comprising an indication that subscription information of the device has changed to allow the device to use an aerial service, wherein the indication comprises a Service-Level-AA subscription indication; and
a transmitter (230) configured to, in response to receiving the message, transmit to the first network entity a request for a mobility registration update procedure.

## Patentansprüche

1. Verfahren (1000), das von einer ersten Netzwerkeinheit durchgeführt wird, wobei das Verfahren umfasst:
Bestimmen (s1000), dass eine Änderung der Abonnementinformationen einer Vorrichtung so stattgefunden hat, dass die Vorrichtung einen Luftdienst nutzen darf; und
Senden (s1010) an die Vorrichtung, einer Nachricht, die eine Anzeige umfasst, dass die geänderten Abonnementinformationen der Vorrichtung es der Vorrichtung erlauben, den Luftdienst zu nutzen, wobei die Anzeige eine Service-Level-AA-Abonnementanzeige umfasst.

2. Verfahren (1000) nach Anspruch 1, wobei die Anzeige eine neue S-NSSAI für den Luftdienst umfasst.

3. Verfahren ( 1000) nach Anspruch 1 oder 2, wobei die erste Netzwerkeinheit eine AMF ist und die Vorrichtung ein UE ist.

4. Verfahren (1000) nach Anspruch 2 oder 3, wobei die neue S-NSSAI Teil einer konfigurierten NSSAI ist.

5. Verfahren (1000) nach einem der vorhergehenden Ansprüche, wobei der Luftdienst ein UAS-Dienst ist.

6. Verfahren (1000) nach einem der vorhergehenden Ansprüche, wobei die Abonnementinformationen Luftabonnementinformationen umfassen.

7. Verfahren (1000) nach einem der vorhergehenden Ansprüche, ferner umfassend: Abonnieren der Abonnementinformationen der Vorrichtung.

8. Verfahren (1000) nach Anspruch 6, wobei die erste Netzwerkeinheit die Abonnementinformationen mit einer zweiten Netzwerkeinheit abonniert.

9. Verfahren (1000) nach Anspruch 8, wobei die zweite Netzwerkeinheit eine UDM ist.

10. Verfahren (1000) nach einem der Ansprüche 7 bis 9, wobei die erste Netzwerkeinheit die Abonnementinformationen zum Zeitpunkt der Registrierung der Vorrichtung bei einem 5GS über die erste Netzwerkeinheit abonniert.

11. Verfahren (1000) nach einem der vorhergehenden Ansprüche, wobei die Abonnementinformationen Zugangs- und Mobilitätsabonnementdaten sind.

12. Verfahren (1100), das von einer Vorrichtung durchgeführt wird, wobei das Verfahren umfasst:
Empfangen (s1100), von einer ersten Netzwerkeinheit, einer Nachricht, die eine Anzeige umfasst, dass sich die Abonnementinformationen der Vorrichtung geändert haben, um der Vorrichtung zu erlauben, einen Luftdienst zu nutzen, wobei die Anzeige eine Service-Level-AA-Abonnementanzeige umfasst; und
Senden (s1110), als Reaktion auf das Empfangen der Nachricht, einer Anforderung für ein Mobilitätsregistrierungs-Aktualisierungsvorgangs an die erste Netzwerkeinheit.

13. Verfahren (1100) nach Anspruch 12, wobei die Anforderung einen Indikator für die erste Netzwerkeinheit umfasst, um einen ersten Autorisierungs- und Authentifizierungsvorgang für den Luftdienst auszulösen.

14. Erste Netzwerkeinheit (300), umfassend:
einen Prozessor (305), der dazu konfiguriert ist, zu bestimmen, dass eine Änderung der Abonnementinformationen einer Vorrichtung (200) so stattgefunden hat, dass es der Vorrichtung erlaubt ist, einen Luftdienst zu nutzen; und
einen Sender (330), der dazu konfiguriert ist, eine Nachricht an die Vorrichtung zu senden, die eine Anzeige umfasst, dass die geänderten Abonnementinformationen der Vorrichtung es der Vorrichtung erlauben, den Luftdienst zu nutzen, wobei die Anzeige eine Service-Level-AA-Abonnementanzeige umfasst.

15. Vorrichtung (200), umfassend:
einen Empfänger (235), der dazu konfiguriert ist, von einer ersten Netzwerkeinheit (300) eine Nachricht zu empfangen, die eine Anzeige umfasst, dass sich die Abonnementinformationen der Vorrichtung geändert haben, um der Vorrichtung zu erlauben, einen Luftdienst nutzen, wobei die Anzeige eine Service-Level-AA-Abonnementanzeige umfasst; und
einen Sender (230), der dazu konfiguriert ist, als Reaktion auf das Empfangen der Nachricht eine Anforderung für einen Mobilitätsregistrierungs-Aktualisierungsvorgang an die erste Netzwerkeinheit zu senden.

## Revendications

1. Procédé (1000) mis en œuvre par une première entité réseau, le procédé comprenant :
la détermination (s1000) qu'il y a eu une modification des informations d'abonnement d'un dispositif de telle sorte que le dispositif est autorisé à utiliser un service aérien ; et
la transmission (s1010), au dispositif, d'un message comprenant une indication selon laquelle les informations d'abonnement modifiées du dispositif permettent au dispositif d'utiliser le service aérien, dans lequel l'indication comprend une indication d'abonnement de niveau de service AA.

2. Procédé (1000) selon la revendication 1, dans lequel l'indication comprend une nouvelle S-NSSAI pour le service aérien.

3. Procédé (1000) selon la revendication 1 ou 2, dans lequel la première entité réseau est une AMF et le dispositif est un EU.

4. Procédé (1000) selon la revendication 2 ou 3, dans lequel la nouvelle S-NSSAI fait partie d'une NSSAI configurée.

5. Procédé (1000) selon l'une des revendications précédentes, dans lequel le service aérien est un service UAS.

6. Procédé (1000) selon l'une des revendications précédentes, dans lequel les informations d'abonnement comprennent des informations d'abonnement aérien.

7. Procédé (1000) selon l'une des revendications précédentes, comprenant en outre : la souscription aux informations d'abonnement du dispositif.

8. Procédé (1000) selon la revendication 6, dans lequel la première entité réseau s'abonne aux informations d'abonnement auprès d'une deuxième entité réseau.

9. Procédé (1000) selon la revendication 8, dans lequel la deuxième entité réseau est une UDM.

10. Procédé (1000) selon l'une des revendications 7 à 9, dans lequel la première entité réseau s'abonne aux informations d'abonnement au moment de l'enregistrement du dispositif auprès d'un système 5GS via la première entité réseau.

11. Procédé (1000) selon l'une des revendications précédentes, dans lequel les informations d'abonnement sont des données d'abonnement d'accès et de mobilité.

12. Procédé (1100) mis en œuvre par un dispositif, le procédé comprenant :
la réception (s1100), depuis une première entité réseau, d'un message comprenant une indication selon laquelle les informations d'abonnement du dispositif ont changé pour permettre au dispositif d'utiliser un service aérien, dans lequel l'indication comprend une indication d'abonnement de niveau de service AA ; et
en réponse à la réception du message, la transmission (s1110) à la première entité réseau d'une demande de procédure de mise à jour de l'enregistrement de mobilité.

13. Procédé (1100) selon la revendication 12, dans lequel la demande comprend un indicateur permettant à la première entité réseau de déclencher une première procédure d'autorisation et d'authentification pour le service aérien.

14. Première entité réseau (300) comprenant :
un processeur (305) configuré pour déterminer qu'il y a eu une modification des informations d'abonnement d'un dispositif (200) de sorte que le dispositif est autorisé à utiliser un service aérien ; et
un émetteur (330) configuré pour transmettre, au dispositif, un message comprenant une indication selon laquelle les informations d'abonnement modifiées du dispositif permettent au dispositif d'utiliser le service aérien, dans lequel l'indication comprend une indication d'abonnement de niveau de service AA.

15. Dispositif (200) comprenant :
un récepteur (235) configuré pour recevoir, depuis une première entité réseau (300), un message comprenant une indication selon laquelle les informations d'abonnement du dispositif ont été modifiées pour permettre au dispositif d'utiliser un service aérien, dans lequel l'indication comprend une indication d'abonnement de niveau de service AA ; et
un émetteur (230) configuré pour, en réponse à la réception du message, transmettre à la première entité réseau une demande de procédure de mise à jour d'enregistrement de mobilité.
